# EUROPÄISCHE PATENTSCHRIFT

(11) **EP 2 574 434 B1**
(45) Veröffentlichungstag und Bekanntmachung des Hinweises auf die Patenterteilung: **08.07.2015**
(21) Anmeldenummer: 12006248.4
(22) Anmeldetag: 05.09.2012
(51) Int. Cl.: B27D 5/00, B23D 45/20, B29C 63/00

(54) **Verfahren und Vorrichtung zur Anbringung eines Kantenbandabschnitts**
Method and device for applying an edging strip section
Procédé et dispositif destinés à l'application d'une section de bande de lisière

(30) Priorität: 01.10.2011 DE 102011114763
(43) Veröffentlichungstag der Anmeldung: 03.04.2013
(73) Patentinhaber: IMA Klessmann GmbH Holzbearbeitungssysteme, 32312 Lübbecke (DE)
(72) Erfinder: Schürmann, Michael, 32257 Bünde (DE); Seifert, Uwe, 32361 Preussisch Oldendorf (DE)
(74) Vertreter: Schober, Mirko

(56) Entgegenhaltungen:
- EP-A2- 1 445 082
- DE-C1- 10 124 081
- US-A- 3 892 153

## Beschreibung

Die Erfindung betrifft ein Verfahren zum Anbringen eines Kantenbandabschnitts nach dem Oberbegriff des Anspruchs 1.

Beider Bekantung von Schmalseiten von plattenförmigen Werkstücken aus Holz- oder Holzaustauschstoffen, im Folgenden auch kurz Platten genannt, werden Kantenbänder einer definierten Länge mit der Kante verbunden. Dazu wird das Kantenband an die Schmalseite der Platte herangeführt und nach Haftbarmachen mit der Schmalseite der Platte verklebt, verschmolzen oder dergleichen. Das Kantenband wird mittels Andruckrollen an die Schmalseite der Platte gedrückt.

Es kommt vor, dass die komplette Schmalseite der Platte rings herum mit einem Kantenband zu versehen ist. Zwar ist die Länge der Schmalseite und damit auch die vorzugebende Länge des daran anzubringenden Kantenbandes im Prinzip bekannt, in der Praxis treten aber am Stoß, d.h. an der Stelle, an der das eine Ende des an der Platte angebrachten Kantenbandes auf das andere, um die Platte herumgeführte Ende desselben Kantenbandes trifft, Probleme auf. Der Kantenbandabschnitt wird üblicherweise von einer Rolle zugeführt und von dieser über eine Trennvorrichtung, z.B. eine Säge, getrennt.

Ein gattungsgemäßes Verfahren ist in EP 1 445 082 A2 beschrieben. Bei der bekannten Vorrichtung ist eine verschwenkbare Säge vorgesehen, welche entlang des Kantenbandes zu einer vorgegebenen Trennstelle geschwenkt und dort festgestellt werden kann. Steuerbar ist diese Säge allerdings nicht.

Zu Beginn des Fügevorganges wird das vorauslaufende Ende an einer (Ist-)Position an der Schmalseite der Platte angesetzt. Über einen Taster wird die Differenz zwischen dieser Ist-Position und einer vorgegebenen Soll-Position ermittelt. Das Kantenband wird weiter von der Rolle abgewickelt und an die Schmalseite der Platte gefügt. Ist der Kantenbandabschnitt so weit von der Rolle abgewickelt, dass die vorgegebene Länge, die der kompletten Schmalseitenlänge der Platte entspricht, erreicht ist, wird dieser bereits zum Teil an der Platte befestigte Kantenbandabschnitt von der Rolle durch die Trennvorrichtung abgeschnitten. Dabei wird die zu Beginn ermittelte Längendifferenz zwischen Soll-Position und Ist-Position berücksichtigt, d.h. die Abschnittstelle wird entsprechend der Differenz nach vorne oder nach hinten korrigiert.

Aufgrund der Toleranzbehaftung der beteiligten Komponenten (Trennvorrichtung, Bekantungseinrichtung, Werkstück, Kantenband) und der Tatsache, dass die Komponenten mit einer Relativgeschwindigkeit zueinander betrieben werden, ist zum Einen die Länge des Kantenbandabschnitts und dessen Schnittfläche toleranzbehaftet. Zum Anderen erfolgt nach dem Trennen die Verbindung im Bereich des Stoßes nicht sauber.

Um einen sauberen Stoß zu realisieren, muss für den Trennschnitt der Vorschub des Kantenbandes angehalten werden. Bei gleichbleibendem Druck der Andruckrolle und Anhalten des Kantenbandes führt dies zu einer unerwünschten Dellenbildung im Kantenband.

Aufgabe der Erfindung ist es, ein Verfahren der eingangs genannten Art anzugeben, bei denen eine saubere Anbringung des Kantenbandabschnitts im Bereich des Stoßes möglich ist.

Gelöst wird diese Aufgabe durch ein Verfahren zum Anbringen eines Kantenbandabschnitts mit den Merkmalen des Anspruchs 1. Vorteilhafte Ausführungsformen finden sich in den Unteransprüchen.

Der Erfindung liegt der Gedanke zugrunde, die Trennvorrichtung jedenfalls temporär mit dem Kantenband mitzuführen. So kann ein Trennschnitt während des Vorschubs des Kantenbandes erfolgen und die oben geschilderten Nachteile treten nicht auf. Es genügt dabei, wenn die Trennvorrichtung entlang und parallel zu einer Zuführstrecke, auf der die Zuführung des Kantenbandes an das Werkstück mit einer gegebenen Zuführgeschwindigkeit erfolgt, wenigstens abschnittweise mit einer Vorschubgeschwindigkeit verfahren wird, welche im Wesentlichen der Zuführgeschwindigkeit entspricht oder ihr gleich ist. Das Mitführen der Trennvorrichtung kann wie geschildert linear erfolgen, indem die Trennvorrichtung parallel zur Zuführstrecke des Kantenbandes verschoben wird. Ebenso ist es möglich, dass die Trennvorrichtung auf einer nicht linearen Bahn geführt wird, z.B. auf einer Kreisbahn. In diesem Fall sollte die Bewegung der Trennvorrichtung so gesteuert werden, dass ihre Geschwindigkeitskomponente in Richtung parallel zum Kantenband etwa der Zuführgeschwindigkeit des Kantenbandes entspricht. Durch das Mitführen der Trennvorrichtung bewegt diese sich immer über demselben Bereich des zu trennenden Kantenbandes und es kann beim im Winkel zum Kantenband erfolgenden Trennschnitt zu keiner Verschiebung in Zuführrichtung kommen. Zudem muss das Kantenband während des Trennvorganges nicht angehalten wer den, wodurch weitere oben geschilderte Nachteile vermieden werden.

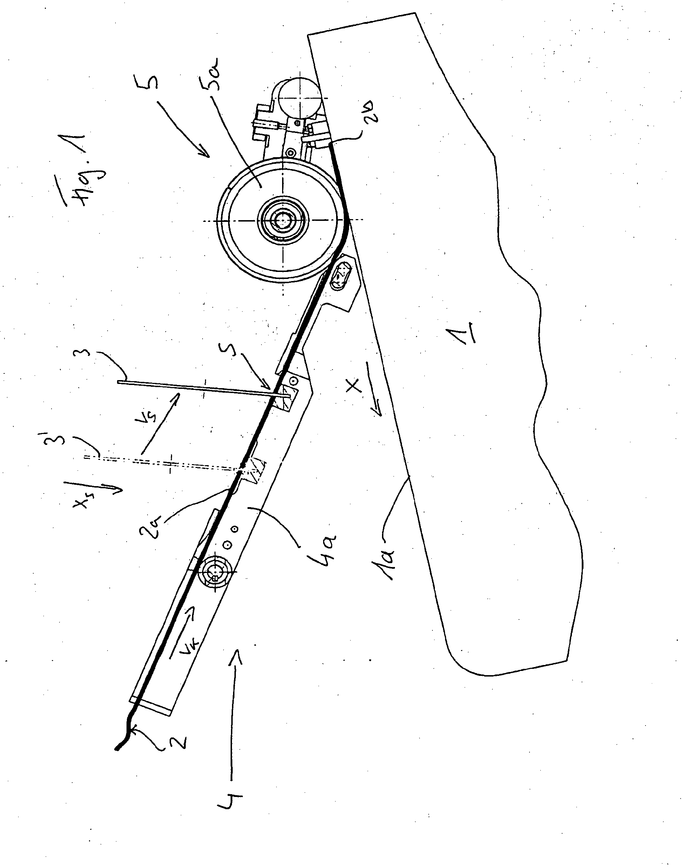

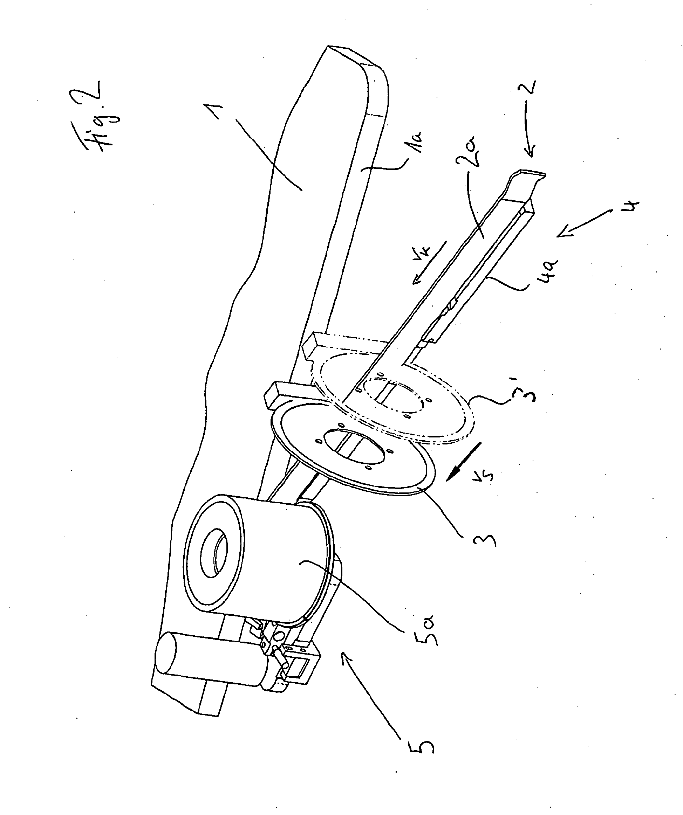

Das erfindungsgemäße Verfahren und die erfindungsgemäße Vorrichtung werden nachfolgend anhand der Figuren 1 und 2 näher erläutert.
Figur 1 zeigt einen Ausschnitt der erfindungsgemäßen Vorrichtung in Draufsicht.
Figur 2 zeigt eine perspektivische Ansicht eines Ausschnitts der erfindungsgemäßen Vorrichtung.
Figur 3 zeigt eine besondere Ausführungsvariante des erfindungsgemäßen Verfahrens.

In den beiden Figuren ist mit 1 das zu bekantende Werkstück gezeigt, an welches ein Kantenbandabschnitt 2 (im Folgenden der Einfachheit halber auch Kantenband genannt), also ein Abschnitt vorgegebener Länge gefügt wird. Dazu weist die erfindungsgemäße Vorrichtung eine Zuführeinrichtung 4 auf, über welche das Kantenband 2 an das Werkstück 1 herangeführt wird. Das Kantenband 2 wird in der Regel endlos auf einer Rolle vorgehalten und von dieser abgerollt. Wichtig ist, dass es von der Zuführeinrichtung mit einer bestimmten (auch vorgegebenen) Geschwindigkeit vK relativ zu einer an der Zuführeinrichtung 4 vorgesehenen Zuführstrecke 4a dem Werkstück 1 zugeführt wird. Diese Geschwindigkeit vK wird im Folgenden auch Zuführgeschwindigkeit genannt.

Mittels eines Bekantungsaggregats 5, welches hier mit einer Andruckrolle 5a versehen ist und welches nicht weiter dargestellte Mittel zum Haftbarmachen einer am Kantenband 2 fügeseitig vorgesehenen oder noch vorzusehenden Funktions- oder Klebeschicht aufweist, wird das Kantenband 2 auf die Schmalseite 1a des Werkstücks 1 aufgebracht. Auf die Art und Weise, über welchen Mechanismus eine Verbindung zwischen Kantenband 2 und der in Richtung X verlaufenden Schmalseite 1a des Werkstücks 1 erfolgt, soll hier nicht eingegangen werden. Die Andruckrolle sorgt jedenfalls dafür, dass nach dem Haftbarmachen der Funktionsschicht des Kantenbandes 2 dieses an die Schmalseite 1a angedrückt wird.

Dabei wird solange von der Zuführeinrichtung 4 das Kantenband nachgeliefert, bis eine Solllänge erreicht ist. Ist diese erreicht, wird das Kantenband 2, dessen nach dem Bekanten außen sichtbare Oberfläche mit 2a bezeichnet ist, an der vorgesehenen Trennstelle S mit einer Trennvorrichtung 3, bevorzugt einer Säge, abgeschnitten. Die korrekte Stelle S wird dadurch ermittelt, dass die Länge der zu bekantenden Schmalseite 1a und damit die Länge des erforderlichen Kantenbandabschnitts 2 vorgegeben ist. Beim Heranführen des vorauslaufenden Endes 2b des Kantenbandes 2 wird dessen Startposition auf dem Werkstück 1 erfasst. Aus der gemessenen Startposition und dem Abstand der Trennvorrichtung 3 zur Andruckrolle 5a kann dann die Stelle S ermittelt werden, an der die Trennung des Kantenbandes 2 erfolgen soll, die Trennstelle S wird wie oben angedeutet ggf. durch eine Abweichung zwischen vorgegebenem Startpunkt und tatsächlich gemessenem Startpunkt korrigiert.

Die Trennvorrichtung 3 ist erfindungsgemäß beweglich ausgeführt, und kann entlang der Zuführstrecke 4a unterschiedliche Positionen einnehmen, wie durch die Positionen 3' und 3 angedeutet ist. Im gezeigten Beispiel ist die Trennvorrichtung 3', 3 als Säge dargestellt, andere geeignete Trennvorrichtungen können ebenfalls eingesetzt werden.

Befindet sich nun die vorgegebene Stelle S, an der das Kantenband 2 abgeschnitten werden soll, im Bereich der Zuführstrecke 4a und im Erfassungsbereich der Trennvorrichtung 3', 3, dann wird diese parallel zum Kantenband 2 mit einer Vorschubgeschwindigkeit vS in derselben Richtung wie das Kantenband 2 bewegt. Dies geschieht so, dass wenigstens zu dem Zeitpunkt, zu dem der Schnitt erfolgen soll, die Vorschubgeschwindigkeit vS und die Zuführgeschwindigkeit vK gleich groß sind; die Bewegungen von Kantenband 2 und Trennvorrichtung sind dann in Zuführrichtung (Vorschubrichtung des Kantenbandes 2 auf der Zuführstrecke 4a) synchronisiert. Diese Synchronisation sollte zumindest während des Trenn- bzw. Sägevorgangs aufrecht erhalten werden.

Im gezeigten Beispiel erfolgt der Trennschnitt in Richtung Xs in einem Winkel zur Oberfläche 2a des Kantenbandes 2. Ein Schnitt kann auch in einem rechten Winkel erfolgen, bevorzugt ist aber ein bezüglich der Oberfläche des Kantenbandes und der Zuführrichtung leicht schräger Schnitt.

Auf diese Weise kann während des Bekantungsvorganges und damit während des Andrückens ein sauberer Trennschnitt erfolgen, ohne dass zum Schneiden der Bekantungsvorgang unterbrochen oder verlangsamt werden muss. Damit ist eine saubere Verarbeitung unter Ausbildung eines sauberen Stoßes der beiden Enden des Kantenbandabschnitts 2 möglich.

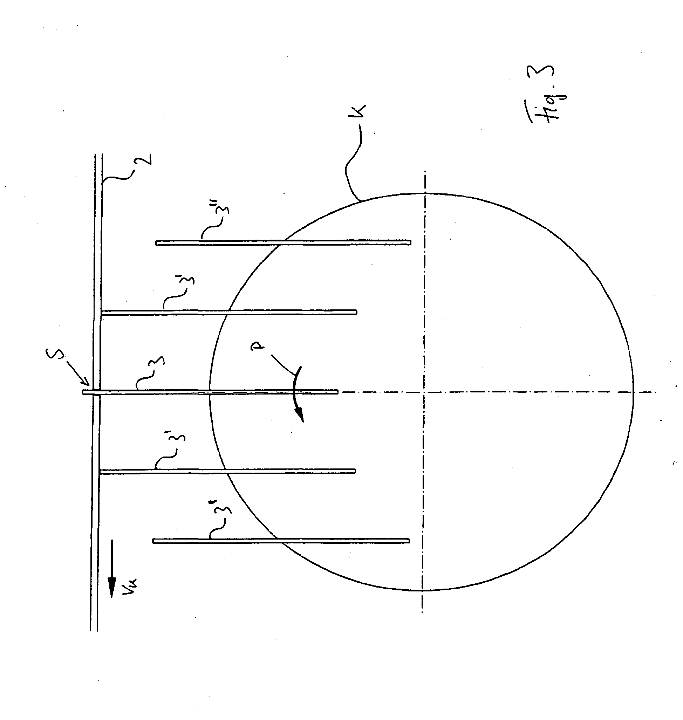

Die mit Bezug auf die Figuren 1 und 2 beschriebene Erfindung sieht im Wesentlichen eine Verlagerung der Trennvorrichtung 3 vor, bei der diese linear und parallel zur Zuführrichtung bzw. parallel zur Richtung des Kantenbandes 2 mit im Wesentlichen der Zuführgeschwindigkeit vK verschoben wird. Wie in Figur 3 schematisch gezeigt, kann die Trennvorrichtung 3, wie durch die unterschiedlichen Positionen 3", 3', 3 angedeutet, auch so mitgeführt werden, dass ihre Verlagerung zumindest während des Trennvorgangs nicht entlang einer Linie, sondern nicht linear erfolgt. Die Trennvorrichtung 3 kann zu diesem Zweck auf einer Kurve K geführt werden, die im einfachsten Fall ein Kreisbogen ist. Wichtig für die Erfindung ist, dass die Verlagerung der Trennvorrichtung 3 mit einer Bewegung erfolgt, die wenigstens eine Richtungskomponente aufweist, die (im Wesentlichen) parallel zum Kantenband 2 liegt, wie dies durch den Bewegungspfeil P angedeutet ist. Die (nicht lineare) Bewegung der Trennvorrichtung 3, die im Übrigen bevorzugt als Säge ausgebildet ist, ist bevorzugt so gesteuert, dass jedenfalls ihre Horizontalkomponente, d.h. ihre Komponente parallel zum Kantenband 2 gleich oder im Wesentlichen gleich der Zuführgeschwindigkeit vK des Kantenbandes 2 ist. So kann ebenfalls ein Schnitt am Punkt S des Kantenbandes durch Führen der Trennvorrichtung entlang der Kurve K erfolgen.

## Patentansprüche

1. Verfahren zum Anbringen eines Kantenbandabschnitts (2) mit vorgegebener Länge an der Schmalseite (1a) eines Werkstücks (1) aus Holz oder Holzaustauschstoffen, bei welchem das Kantenband (2) über eine Zuführeinrichtung (4) mit einer Zuführstrecke (4a) mit einer Zuführgeschwindigkeit (vK) relativ zur Zuführstrecke (4a) dem Werkstück (1) zugeführt wird, und in einen haftenden Zustand überführt und mittels eines Bekantungsaggregats (5) an das Werkstück (1) gefügt und unter Andrücken mittels einer Andruckenrichtung (5a) mit diesem verbunden wird, wobei der Kantenbandabschnitt (2) mittels einer Trennvorrichtung (3) an einer vorgegebenen Stelle während des Bekantungsvorgangs abgetrennt wird, so dass der Kantenbandabschnitt (2) die vorgegebene Länge erhält,
**dadurch gekennzeichnet,**
**dass** die Trennvorrichtung (3) wenigstens beim Trennvorgang mit dem Kantenbandabschnitt (2) entlang der Zuführstrecke (4a) mit einer Vorschubgeschwindigkeit (vS) relativ zur Zuführstrecke (4a) mitgeführt wird, wobei die Vorschubgeschwindigkeit (vS) oder wenigstens deren Komponente parallel zur Zuführstrecke (4a) der Zuführgeschwindigkeit (vk) im Wesentlichen entspricht oder gleich ist.

2. Verfahren nach Anspruch 1,
**dadurch gekennzeichnet,**
**dass** der Trennschnitt durch das Kantenband (2) schräg zur Oberfläche (2a) des Kantenbandes (2) erfolgt.

3. Verfahren nach Anspruch 1 oder 2,
**dadurch gekennzeichnet,**
**dass** die vorgegebene Länge des Kantenbandabschnitts (2) der Umfangslänge des zu bekantenden Werkstücks (1) entspricht.

4. Verfahren nach einem der vorigen Ansprüche,
**dadurch gekennzeichnet,**
**dass** als Trennvorrichtung (3) eine Schneidvorrichtung, insbesondere eine Säge, eingesetzt wird.

## Claims

1. Method for applying an edging strip section (2) with predetermined length to the narrow side (1a) of a workpiece (1) of wood or wood substitutes, wherein the edging strip (2) is supplied to the workpiece (1) via a feed unit (4) with a feed section (4a) at a feed speed (vK) relative to the feed section (4a), and changes into an adhesive state and is joined by means of an edging assembly (5) to the workpiece (1) and is connected to same by contact pressure by means of a contact pressure device (5a), wherein the edging strip section (2) is cut off by means of a separating device (3) at a predetermined point during the edging process so that the edging strip section (2) receives the predetermined length, **characterised in that** the separating device (3) at least during the separating process is guided with the edging strip section (2) along the feed section (4a) at an advancing speed (vS) relative to the feed section (4a), wherein the advancing speed (vS) or at least components thereof parallel to the feed section (4a) corresponds substantially to or is the same as the feed speed (vk).

2. Method according to claim 1 **characterised in that** the separating cut through the edging strip (2) is carried out inclined to the surface (2a) of the edging strip (2).

3. Method according to claim 1 or 2 **characterised in that** the predetermined length of the edging strip section (2) corresponds to the peripheral length of the workpiece (1) which is to be edged.

4. Method according to one of the preceding claims **characterised in that** a cutting device, more particularly a saw, is used as the separating device (3).

## Revendications

1. Procédé d'encollage d'un morceau de bande de chant (2) d'une longueur prédéterminée sur le côté étroit (1a) d'une pièces à traiter (1) en bois ou en matériaux de remplacement du bois, dans lequel la bande de chant (2) est amenée à la pièces à traiter (1), au moyen d'un dispositif d'alimentation (4), avec une ligne d'alimentation (4a), à une vitesse d'alimentation (vk) relative à la ligne d'alimentation (4a), est mise en état d'adhésivité et est appliquée sur la pièces à traiter (1) au moyen d'un dispositif de revêtement de chant (5) et est reliée à celle-ci par pression exercée par un dispositif de pression (5a), sachant que le morceau de bande de chant (2), pendant le processus de revêtement de chant, est sectionné à un endroit prédéterminé, au moyen d'un dispositif de sectionnement (3), de telle manière que ledit morceau de bande de chant (2) présente la longueur prédéterminée,
**caractérisé en ce que**
le dispositif de sectionnement (3) est entraîné avec le morceau de bande de chant (2), au moins pendant le processus de sectionnement, le long de la ligne d'alimentation (4a), à une vitesse d'avance (vS), par rapport à la ligne d'alimentation (4a), sachant que la vitesse d'avance (vS), ou au moins sa composante parallèle à la ligne d'alimentation (4a), correspond sensiblement ou est égale à la vitesse d'alimentation (vk).

2. Procédé selon la revendication 1,
**caractérisé en ce que**
la coupe de séparation est effectuée à travers la bande de chant (2), obliquement par rapport à la surface (2a) de la bande de chant (2).

3. Procédé selon revendication 1 ou 2,
**caractérisé en ce que**
la longueur prédéterminée du morceau de bande de chant (2) correspond à la longueur du pourtour de la pièce à traiter (1).

4. Procédé selon l'une des revendications précédentes,
**caractérisé en ce que**
l'on utilise, comme dispositif de sectionnement (3), un dispositif de coupe, en particulier une scie.
